# EUROPÄISCHE PATENTANMELDUNG

(11) **EP 3 974 916 A1**
(43) Veröffentlichungstag der Anmeldung: **30.03.2022**
(21) Anmeldenummer: 20198105.7
(22) Anmeldetag: 24.09.2020
(51) Int. Cl.: G05B 13/02, G05B 19/4061, G06N 3/08

(54) **SICHERHEITSKONFORME DURCH REINFORCEMENT LEARNING GESTEUERTE INDUSTRIEANLAGEN**

(71) Anmelder: Siemens Aktiengesellschaft, 80333 München (DE)
(72) Erfinder: RITZ, Fabian, 81475 München (DE); Schmid, Reiner, 80538 München (DE); WIEGHARDT, Jan, 81475 München (DE)

(57) **Zusammenfassung**

Die Erfindung betrifft ein Verfahren zum Trainieren einer Steuereinrichtung (110) für eine elektronisch steuerbare Einrichtung (100). Das Verfahren umfasst Schritte des: Erfassens (S10) eines Funktionsablaufs der Einrichtung (100); des Evaluierens (S12) des erfassten Funktionsablaufs basierend auf einer ersten Parametrisierung, welche die Funktionalität betrifft, und einer zweiten Parametrisierung, welche eine oder mehrere Sicherheitsanforderungen betrifft; und des Bereitstellens (S14) mindestens eines Bewertungssignals basierend auf dem Evaluieren. Die Erfindung betrifft außerdem entsprechende Einrichtungen (100, 110).

## Beschreibung

Die Erfindung betrifft die Steuerung eines autonomen Industriesystems. Insbesondere betrifft die Erfindung die Steuerung eines maschinell lernfähigen Industriesystems.

Für den Betrieb von autonomen Industriesystemen, beispielsweise selbstfahrende Transportrobotern, werden zunehmend Methoden des maschinellen Lernens oder der künstlichen Intelligenz eingesetzt. Diese werden dazu verwendet, die Kernfunktionalität eines Systems zu trainieren und das System entsprechend anzusteuern.

Eine der Erfindung zugrunde liegende Aufgabe besteht in der Bereitstellung einer verbesserten Technik zum Trainieren und Betreiben von elektronisch steuerbaren Einrichtungen, insbesondere autonomen Industriesystemen und/oder selbststeuerfähigen Einrichtungen.

Die Erfindung löst die Aufgabe mittels der Gegenstände der unabhängigen Ansprüche. Unteransprüche geben bevorzugte Ausführungsformen wieder.

Insbesondere betrifft die Erfindung zu trainierende Systeme wie künstliche Intelligenzen oder neuronale Netzwerke, die durch Reinforcement Learning (RL) trainiert werden können. Dabei können die Systems jeweils in oder als Steuereinrichtung ausgebildet sein, und/oder auf einer Steuereinrichtung laufen oder lauffähig sein. Die künstliche Intelligenz kann ein System ansteuern, um einen Funktionsablauf wiederholt und gegebenenfalls abgewandelt durchzuführen, um ein bestimmtes funktionales Ziel zu erreichen. Das funktionale Ziel kann vorgegeben sein, etwa durch einen Betreiber, und beispielsweise durch eine geeignete Parametrisierung beschrieben sein, welche als eine die Funktionalität beschreibende Parametrisierung angesehen werden kann.

Ein Beobachter oder eine Erfassungseinrichtung erfasst den Funktionsablauf und gegebenenfalls die Umgebung und stellt ein Bewertungssignal, insbesondere ein Belohnungssignal, für das zu trainierende System bereit, welches dem zu trainierenden System anzeigt, ob das Funktionalitätsziel oder ein Teilziel erreicht wurde. Es können auch erfasste Daten an das trainierende System übermittelt werden. Es können viele abgewandelte Abläufe durchgeführt werden, bis sich basierend auf akkumulierten Bewertungssignalen ein optimierter oder akzeptierter Funktionsablauf findet, auf welchen das System trainiert wird.

Ein Beobachter kann allgemein eine Sensorik umfassen, welche geeignet ist, das zu steuernde System (auch als Zielsystem bezeichnet) und dessen Funktionsablauf zu erfassen und/oder überwachen, und gegebenenfalls die Umgebung des zu steuernden Systems zu erfassen und/oder überwachen. Eine Sensorik kann allgemein einen oder mehrere Sensoren umfassen, welche beispielsweise optisch und/oder magnetisch und/oder visuell und/oder elektromagnetisch und/oder tastfähig und/oder akustisch und/oder lastmessend und/oder geschwindigkeitserfassend funktionsfähig sein können; es sind aktive Sensoren und/oder passive Sensoren vorstellbar. Beispielsweise kann die Sensorik Laserabtastung umfassen (als aktive Sensorik) und/oder Radarabtastung und/oder Videoabtastung (als Beispiel für passive Sensorik).

Die Sensorik kann je nach Funktionsablauf dazu ausgebildet sein, eine eindimensionale, zweidimensionale oder dreidimensionale Abtastung (auch als Erfassung oder Überwachung bezeichnet) vorzunehmen. Es ist vorstellbar, dass eine Sensorik einen oder mehrere Sensoren umfasst, die als Teil des Zielsystems (etwa Stromstärkesensoren, Lagesensoren, Lastsensoren, interner Radar, etc.) und/oder separat davon ausgebildet sein können (etwa Videosensoren, externer Radar, etc.).

Im Rahmen dieser Diskussion kann ein zu trainierendes System als künstliche Intelligenz und/oder neurales Netzwerk und/oder als Steuereinrichtung angesehen werden, die als Ziel oder Resultat des Trainings (als schließlich trainiertes System) in der Lage sein soll, ein Zielsystem zu steuern. Dabei kann das trainierende oder trainierte System als Teil des Zielsystems ausgebildet sein, etwa in dieses integriert sein, und/oder es kann separat davon ausgebildet, sein, etwa mit dem Zielsystem kommunikationsfähig und/oder in dieses einbaubar.

Es ist insbesondere ein Verfahren zum Trainieren einer Steuereinrichtung für eine elektronisch steuerbare Einrichtung vorgesehen. Das Verfahren umfasst das Erfassen eines Funktionsablaufs der Einrichtung. Ferner umfasst das Verfahren das Evaluieren des erfassten Funktionsablaufs basierend auf einer ersten Parametrisierung, welche die Funktionalität betrifft, und basierend auf einer zweiten Parametrisierung, welche eine oder mehrere Sicherheitsanforderungen betrifft.

Außerdem umfasst das Verfahren bevorzugt das Bereitstellen mindestens eines Bewertungssignals basierend auf dem Evaluieren. Entsprechend können Sicherheitsanforderungen beim Training berücksichtigt werden, wodurch eine verbesserte Steuerung durch ein trainiertes System erfolgen kann. Ferner kann das Training effizient und flexibel etwa mit unterschiedlichen Umgebungen durchgeführt werden. Das Verfahren kann das Trainieren der Steuereinrichtung basierend auf dem mindestens einen Bewertungssignal umfassen; dies kann insbesondere durch die Steuereinrichtung durchgeführt werden.

Das Erfassen kann durch einen Beobachter wie eine Beobachtungseinrichtung und/oder eine separate Evaluierungseinrichtung erfolgen. Die Evaluierungseinrichtung oder Beobachtungseinrichtung kann eine separate erste Einrichtung zum Evaluieren der ersten Parametrisierung und eine separate zweite Einrichtung zum Evaluieren der zweiten Parametrisierung aufweisen; alternativ kann die Evaluierungseinrichtung oder Beobachtungseinrichtung dazu ausgebildet sein, eine kombinierte Evaluierung vorzunehmen. Hierin beschrieben Verfahrenshandlungen oder Schritte können durch entsprechende Module (etwa Software-Module) ausgeführt werden. Das Evaluieren des erfassten Funktionsablaufs kann basierend auf einer Repräsentation des Funktionsablaufs erfolgen, etwa bereitgestellt von einer Erfassungs- oder Beobachtungseinrichtung. Die Erfindung erlaubt es insbesondere, durch entsprechendes Training spezielle Software und/oder Hardware zur Einhaltung der Sicherheitsanforderungen einzusparen, die sonst notwendig sein könnten.

Ein Evaluieren basierend auf der ersten Parametrisierung kann allgemein andere Aspekte oder Parameter des Funktionsablaufs betreffen als ein Evaluieren basierend auf der zweiten Parametrisierung. Entsprechend können zur jeweiligen Evaluierung unterschiedliche Parameter des erfassten Funktionsablaufs und/oder der Umgebung berücksichtigt werden. Eine Erfassungseinrichtung kann entsprechende Daten übermitteln, und/oder eine Evaluierungseinrichtung kann entsprechende Parameter aus bereitgestellten Daten herauslesen.

Allgemein kann eine Steuereinrichtung als zu trainierendes oder trainiertes System angesehen werden. Eine elektronisch steuerbare Einrichtung kann insbesondere durch die Steuereinrichtung steuerbar oder gesteuert sein, etwa über eine geeignete Kommunikationsschnittstelle. Eine elektronisch steuerbare Einrichtung kann als ein Zielsystem angesehen werden. Es ist vorstellbar, dass eine elektronisch steuerbare Einrichtung als autonome oder semi-autonome Einrichtung ausgebildet ist, welche etwa durch ein trainiertes System und/oder eine entsprechende Steuereinrichtung steuerbar oder angesteuert sein kann. Beispiele für elektronisch steuerbare Einrichtungen sind Industrieanlagen oder Roboter oder Fertigungsanlagen oder Geräte. Eine Einrichtung kann mobil sein, oder stationär. Allgemein kann eine elektronisch steuerbare Einrichtung einer oder mehreren Sicherheitsanforderungen unterliegen. Es ist vorstellbar, dass eine elektronisch steuerbare Einrichtung zur Bearbeitung und/oder Verarbeitung und/oder Herstellung eines oder mehrere Produkte oder Vorprodukte vorgesehen ist.

Eine Parametrisierung kann allgemein eine digital und/oder elektronisch verarbeitbare und/oder computerlesbare Darstellung sein, etwa einer Funktionalität oder einer oder mehrere Sicherheitsanforderungen.

Eine Funktionalität kann eine oder mehrere Komponenten und/oder Teilfunktionalitäten und/oder Bedingungen und/oder Zielvorgaben und/oder Steuerungsparameter und/oder Optimierungsparameter betreffen und/oder umfassen. Eine Zielvorgabe kann etwa ein zu erreichendes Ergebnis eines Funktionsablaufs betreffen, beispielsweise ein eingepasstes Bauteil oder eine Schweißnaht oder ein Ablegen eines Gegenstands an einer bestimmten Stelle. Insbesondere kann eine Zielvorgabe einen Funktionsablauf betreffen, sodass nach Beenden des Funktionsablaufs die Zielvorgabe erfüllt sein soll.

Ein Funktionsablauf kann allgemein eine oder mehrere Bewegungen und/oder Aktionen umfassen, die von der elektronisch steuerbaren Einrichtung ausgeführt werden, etwa unter Steuerung durch die Steuereinrichtung. Die Steuereinrichtung kann allgemein dazu ausgebildet sein, und/oder das Verfahren kann umfassen, einen Funktionsablauf zum Erreichen einer Zielvorgabe zu optimieren, etwa bezüglich einer oder mehrerer Optimierungsparameter. Beispielsweise kann bezüglich Effizienz und/oder Energieverbrauch und/oder Geschwindigkeit und/oder Bearbeitungszeit optimiert werden.

Eine Sicherheitsanforderung kann allgemein ein oder mehrere Bedingungen oder Vorgaben bezüglich Sicherheitsaspekten betreffen. Eine Sicherheitsanforderung kann Umgebungsbezogen sein, und/oder die Einrichtung selbst betreffen. Beispielsweise kann eine Sicherheitsanforderung ein oder mehrere räumliche Bereiche betreffen, in welche die Einrichtung nicht eindringen soll, und/oder eine maximale Geschwindigkeit (zum Beispiel absolut und/oder in bestimmten räumlichen Bereichen) und/oder Stromstärke und/oder Lautstärke, oder ähnliches. Eine Sicherheitsanforderung kann einen Funktionsablauf und/oder eine Funktionalität betreffen und/oder damit assoziiert sein. Teilfunktionalitäten (oder Teil-Funktionsabläufen) können gleichen oder unterschiedlichen Sicherheitsanforderungen assoziiert sein. Etwa können für bestimmte Teilfunktionsabläufe andere Geschwindigkeiten zugelassen sein (als Sicherheitsanforderung) als für andere.

Es kann insbesondere vorgesehen sein, dass die zweite Parametrisierung die Umgebung der Einrichtung berücksichtigt und/oder parametrisiert. So können unterschiedliche Gegebenheiten berücksichtigt werden. Insbesondere können räumliche Gegebenheiten parametrisiert sein, etwa Wandabstände und/oder Raumhöhen und/oder Hindernisse und/oder Wege. Die Sicherheitsanforderungen können im Bezug zu der Umgebung parametrisiert sein, insbesondere können Funktionsabläufe mit Bezug auf die Umgebung parametrisiert sein.

Das Bewertungssignal kann ein Bewertungssignal für Reinforcement Learning sein. Entsprechend kann das Verfahren das Trainieren basierend auf Reinforcement Learning umfassen, und/oder die Steuereinrichtung entsprechend ausgebildet sein. So kann Reinforcement Learning ausgenutzt werden, um die Steuereinrichtung zu trainieren. Es ist vorstellbar, dass ein Bewertungssignal ein Belohnungssignal und/oder negatives Belohnungssignal zu repräsentieren vermag. Allgemein kann die Steuereinrichtung ein oder mehrere Agenten umfassen und/oder repräsentieren. Unterschiedliche Agenten können beispielsweise unterschiedliche Komponenten oder Untereinrichtungen eines Zielsystem oder einer elektronisch steuerbaren Einrichtung anzusteuern vermögen und/oder zugeordnet sein. Jeder Agent kann ein separates zu trainierendes System oder trainiertes System repräsentieren. Es kann vorgesehen sein, dass jeder Agent ein eigenes neuronales Netz oder eine künstliche Intelligenz aufweist, die der entsprechenden Komponente zugeordnet sein kann.

Es kann vorgesehen sein, dass das mindestens eine Bewertungssignal ein mehrstufiges Signal ist; es sind allerdings auch Varianten mit einstufigem Signal vorstellbar. Ein mehrstufiges Signal kann mehr als zwei unterschiedliche Werte oder Stufen annehmen, etwa Signalpegel oder digitale Werte; ein einstufiges Signal kann im Wesentlichen 0 oder 1 (oder zwei andere voneinander unterscheidbare Werte) repräsentieren. Ein mehrstufiges Signal kann insbesondere einen oder mehrere positive Werte (und/oder ein entsprechendes Belohnungssignal) darstellen und/oder ein oder mehrere negative Werte (und/oder ein entsprechendes negatives Belohnungssignal). Somit ergibt sich eine flexible Signalisierung, die insbesondere das Berücksichtigen von beiden Parametrisierungen erlaubt. Allgemein kann das Bewertungssignal (ob einstufig oder mehrstufig) eine kombinierte Evaluation der Parametrisierungen repräsentieren.

Es ist vorstellbar, dass das mindestens eine Bewertungssignal mehrere Signale umfasst. Diese können von einer kombinierten Evaluierung separat übertragen werden oder von separaten Evaluierungseinrichtungen stammen. Unterschiedliche Signale können eine Bewertung oder Evaluierung unterschiedlicher Parametrisierungen repräsentieren. Die Signale können die Evaluierung oder Bewertung desselben Funktionsablaufs oder Teil-Funktionsablaufs betreffen. Dies ermöglicht erleichterte Anpassung des Systems and unterschiedliche Umgebungen oder Sicherheitsanforderungen, da sich die Signalisierung und vorhergehende Prozesse gegebenenfalls separat implementieren lassen, etwa durch separate Hardware. Ein Kombinieren der Signale kann vom zum trainierenden System durchgeführt werden, und/oder das Trainieren kann das Kombinieren umfassen.

Allgemein kann die zweite Parametrisierung automatisiert vorgegeben sein, etwa basierend auf einer Umgebungsparametrisierung. Die zweite Parametrisierung kann durch eine entsprechende Steuereinrichtung und/oder ein geeignetes Programm vorgegeben sein. Alternativ oder zusätzlich kann ein Benutzer die zweite Parametrisierung vorgeben und/oder die automatisierte Vorgabe beeinflussen. Somit kann die zweite Parametrisierung leicht und zuverlässig vorgegeben werden. Für die erste Parametrisierung gilt analoges.

Es kann allgemein vorgesehen sein, dass das Evaluieren die erste Parametrisierung und die zweite Parametrisierung dynamisch gewichtet. Insbesondere kann eine relative Priorität und/oder Wichtigkeit der Funktionalität und der Sicherheitsanforderung(en) in unterschiedlichen Teilschritten des Trainings unterschiedlich ausfallen. Beispielsweise kann bei Beginn des Trainings eine höhere Priorität auf die Funktionalität gelegt werden (höheres Gewicht), während nach Erreichen der gewünschten Funktionalität in späteren Phasen die Sicherheitsanforderungen höher gewichtet sein können.

Alternativ oder zusätzlich können eine oder mehrere Komponenten der ersten Parametrisierung unterschiedlich gewichtet werden, etwa dynamisch, sodass bei unterschiedlichen Teilfunktionalitäten oder Trainingsschritten unterschiedliche Gewichte vorliegen können. Beispielsweise kann ein Parameter wie ein Optimierungsparameter im Laufe des Trainings mit zunehmend höherem Gewicht belegt werden, oder mit niedrigerem Gewicht.

Weiter alternativ oder zusätzlich können eine oder mehrere Komponenten der zweiten Parametrisierung unterschiedlich gewichtet werden, etwa dynamisch, sodass bei unterschiedlichen Teilsicherheitsanforderungen und/oder Trainingsschritten unterschiedliche Gewichte vorliegen können. Beispielsweise kann eine Sicherheitsanforderung wie eine Anforderung bezüglich einer Maximalgeschwindigkeit eines beweglichen Teils im Laufe des Trainings zunehmend höher gewichtet werden, oder mit abnehmendem Gewicht.

Ferner kann vorgesehen sein, dass die erste Parametrisierung und die zweite Parametrisierung dynamisch angepasst werden, etwa bei Erreichen bestimmter Teilziele oder Teilvorgaben, und/oder im fortschreitenden Verlauf des Trainings. Das Evaluieren kann basierend auf dynamisch angepasster erster Parametrisierung und/oder zweiter Parametrisierung erfolgen. Ein dynamisches Anpassen kann allgemein das Hinzunehmen oder Hinwegnehmen eines oder mehrerer Parameter umfassen, und/oder das Ändern eines Zieles und/oder eines Schwellenwertes, oder ähnliches.

Allgemein kann die Steuereinrichtung in mehreren Teilschritten trainiert werden. Ein Teilschritt kann dabei das Erreichen von Teilzielen betreffen, und/oder einen Trainingsschritt um ein Bewertungssignal für einen mehrfach in abgewandelter Form ausgeführten (Teil-)Funktionsablauf. Somit lässt sich das Training in einfacher zu durchlaufende Einheiten aufteilen, die sich gut abgewandelt wiederholen lassen, um ein Training zu erreichen.

Für einzelne Teilschritte können jeweils ein oder mehrere Teilziele für die Funktionalität und/oder die ein oder mehreren Sicherheitsanforderungen definiert sein. Das Evaluieren für einen Teilschritt kann auf den einen oder mehreren Teilzielen basieren. Die Teilziele für Funktionalität und Sicherheitsanforderungen können miteinander assoziiert sein. Somit kann das Training in kleineren Schritten erfolgen, welche eine gute Anpassung ermöglichen, etwa durch dynamische Gewichtung.

Es kann vorgesehen sein, dass die erste Parametrisierung separat von der zweiten Parametrisierung evaluiert wird.

Ferner ist eine Steuereinrichtung für eine elektronisch steuerbare Einrichtung beschrieben. Die Steuereinrichtung ist dazu ausgebildet, ein hierin beschriebenes Verfahren durchzuführen (und kann ein Trainingssystem repräsentieren), und/oder basierend auf einem hierin beschriebenen Verfahren eine elektronisch steuerbare Einrichtung anzusteuern (und kann ein trainiertes System repräsentieren).

Ein Trainingssystem kann etwa eine Beobachtungseinrichtung und/oder Erfassungseinrichtung und/oder Evaluierungseinrichtung umfassen kann, welche durch eine geeignete Schnittstelle mit einem zu trainierenden System (wie einer zu trainierenden Steuereinrichtung)zu kommunizieren vermag, etwa um das mindestens eine Bewertungssignal bereitzustellen. Das Trainingssystem kann die zu trainierende oder die trainierte Steuereinrichtung umfassen oder zur Kommunikation mit ihr verbunden oder verbindbar sein, etwa über die Schnittstelle. In einigen Varianten kann ein Trainingssystem mit einer elektronisch steuerbaren Einrichtung verbunden oder verbindbar sein, oder ein solche umfassen.

Allgemein kann ein trainiertes System im Betrieb weiter trainiert werden, etwa wenn das Trainingssystem weiter eingesetzt wird. Es kann auch vorgesehen sein, dass ein trainiertes System unabhängig von einem Trainingssystem eingesetzt wird. Eine Steuereinrichtung, welche ein neuronales Netzwerk und/oder eine künstliche Intelligenz oder eine Kopie davon aufweist und/oder laufen lässt, welche wie hierin beschrieben trainiert wurde, kann als ein Beispiel einer Steuereinrichtung angesehen werden, welche dazu ausgebildet ist, basierend auf einem hierin beschriebenen Verfahren eine elektronisch steuerbare Einrichtung anzusteuern.

Es ist ferner eine elektronisch steuerbare Einrichtung vorgesehen, welche eine hierin beschriebene Steuereinrichtung aufweist und/oder durch eine hierin beschriebene Steuereinrichtung angesteuert oder ansteuerbar ist; die Steuereinrichtung kann ein trainiertes System repräsentieren. Allgemein kann ein trainiertes System oder eine trainierte Steuereinrichtung kann eine durch das Verfahren trainierte künstliche Intelligenz oder entsprechendes neurales Netz umfassen und/oder speichern und/oder betreiben.

Außerdem ist ein Computerprogramm beschrieben, welches computerlesbare Instruktionen umfasst, die eine Steuereinrichtung dazu bringen vermögen, ein hierin beschriebenes Verfahren durchzuführen. Die Steuereinrichtung kann eine hierin beschriebene Steuereinrichtung sein, oder ein Trainingssystem repräsentieren.

Ferner ist ein computerlesbares Speichermedium vorgesehen, welches ein beschriebenes Computerprogramm beschreibt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
- Figur 1: ein Schema eines Trainingssystems;
- Figur 2: ein Verfahren zum Trainieren eines zu trainierenden Systems; und
- Figur 3: ein weiteres Schema zum RL-Training
darstellt.

Autonome Industriesysteme und andere Zielsysteme, beispielsweise selbstfahrende Transportroboter, müssen neben der Kernfunktionalität auch Sicherheitsanforderungen erfüllen. Es wird vorgeschlagen, nicht nur die Kernfunktionalität mit Methoden des maschinellen Lernens zu erlangen, sondern auch die Sicherheitsanforderungen dabei zu berücksichtigen.

Bisher werden Sicherheitsanforderungen über den Einsatz von dedizierten Hard- oder Softwarekomponenten berücksichtigt. Am Beispiel eines selbstfahrenden Transportroboters: Eine Umzäunung könnte dauerhaft verhindern, dass der Aktionsbereich des Roboters betreten wird. Eine Kombination aus Näherungssensor (Hardware) und Not-Aus (Software) könnte den Transportroboter im Falle einer Unterschreitung eines Sicherheitsabstandes zum Stillstand bringen. Durch die Erfindung können derartige Maßnahmen unnötig werden.

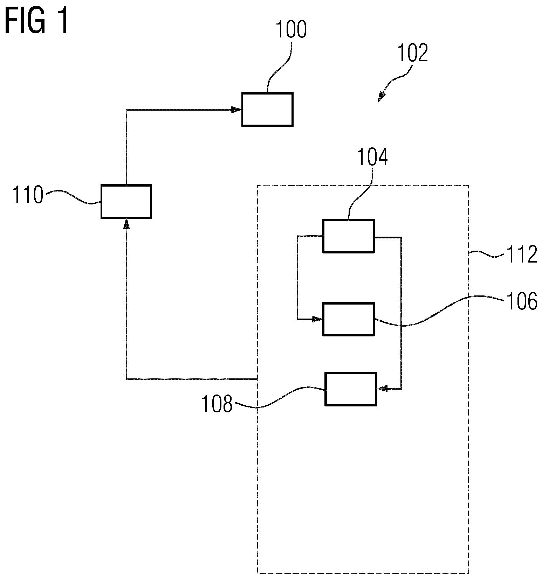

Figur 1 zeigt schematisch ein Trainingssystem zum Trainieren eines zu trainierenden Systems wie einer Steuereinrichtung. Eine elektronisch steuerbare Einrichtung 100, etwa ein Zielsystem wie ein Industrieroboter kann in einer Umgebung 102 agieren, etwa einer Fertigungshalle. Dabei kann die Einrichtung 100 Funktionsabläufe durchlaufen (auch als Aktionen bezeichnet). Ein Beobachter oder eine Erfassungseinrichtung 104 kann die Einrichtung 100 und die Umgebung 102 erfassen, insbesondere Funktionsabläufe der Einrichtung 100. Die Erfassungseinrichtung 104 kann erfasste Funktionsabläufe in der Umgebung 102 an eine oder mehrere Evaluationseinrichtungen weiterleiten.

Im Beispiel der Figur 1 sind eine erste Evaluationseinrichtung 106 gezeigt und eine zweite Evaluationseinrichtung 108 gezeigt; alternativ kann auch eine einzelne Evaluationseinrichtung vorgesehen sein. Die erste Evaluationseinrichtung 106 evaluiert den erfassten Funktionsablauf basierend auf einer ersten Parametrisierung, welche die Funktionalität der Einrichtung 100 betrifft. Die Evaluationseinrichtung 108 evaluiert den erfassten Funktionsablauf basierend auf einer zweiten Parametrisierung, welche eine oder mehrere Sicherheitsanforderungen betrifft. So kann insbesondere evaluiert werden, ob Zielvorgaben beziehungsweise Sicherheitsanforderungen erfüllt sind. Im Beispiel erzeugt jede Evaluierungseinrichtung ein separates Bewertungssignal, das jeweils an eine zu trainierende Steuereinrichtung 110 übermittelt wird.

Die Steuereinrichtung 110 ist dazu ausgebildet, basierend auf den Bewertungssignalen ein Training basierend auf Reinforcement Learning durchzuführen und kann ein entsprechendes neuronales Netz und/oder eine entsprechende KI aufweisen. Die Steuereinrichtung 110 ist ferner dazu ausgebildet, die Einrichtung 100 anzusteuern, insbesondere um Funktionsabläufe durchzuführen und/oder das RL-Training durchzuführen. Die Steuereinrichtung 110 kann empfangene Signale von den Evaluationseinrichtungen 106, 108 kombinieren. In manchen Varianten kann alternativ ein kombiniertes Signal bereitgestellt sein, welches etwa dynamisch gewichtet sein kann. Die Erfassungseinrichtung 104, und die Evaluationseinrichtung 106 und/oder 108 können als Komponenten eines Trainingssystems 112 ausgebildet sein. Die Erfassungseinrichtung 104 kann allgemein dazu ausgebildet sein, erfasste Daten bezüglich des Funktionsablaufs und/oder der Umgebung an die Steuereinrichtung 110 zu übermitteln.

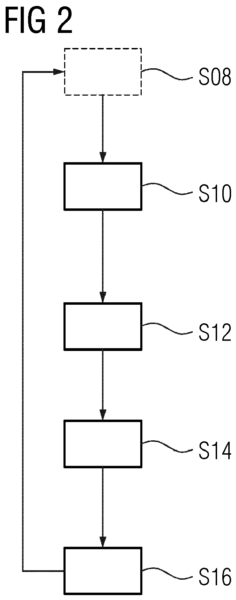

Figur 2 zeigt ein beispielhaftes Verfahren, welches etwa von einem Trainingssystem 112 für eine Steuereinrichtung 110 durchgeführt werden kann, um diese durch RL zu trainieren. In einer (optionalen) Aktion S08 kann ein Funktionsablauf einer elektronisch steuerbaren Einrichtung 100 angesteuert werden, etwa durch eine Steuereinrichtung 110. In einer Aktion S10 wird der Funktionsablauf erfasst, etwa durch eine Erfassungseinrichtung 104. Basierend auf dem erfassten Funktionsablauf wird in einer Aktion S12 eine Evaluierung durchgeführt, basierend auf der ersten Parametrisierung und der zweiten Parametrisierung. In einer nachfolgenden Aktion S14 wird basierend auf der Evaluierung mindestens ein Bewertungssignal bereitgestellt, welches etwa an die Steuereinrichtung 110 übertragen werden kann. In einer Aktion S16 kann basierend auf dem mindestens einen Bewertungssignal ein RL-Training durchgeführt beziehungsweise weitergeführt werden, etwa durch die Steuereinrichtung 110; dabei können allgemein akkumulierte Bewertungssignale aus mehreren erfassten Funktionsabläufen berücksichtigt werden. Der beschriebene Ablauf kann wiederholt werden, für mehrere Trainingsschritte oder Teilschritte.

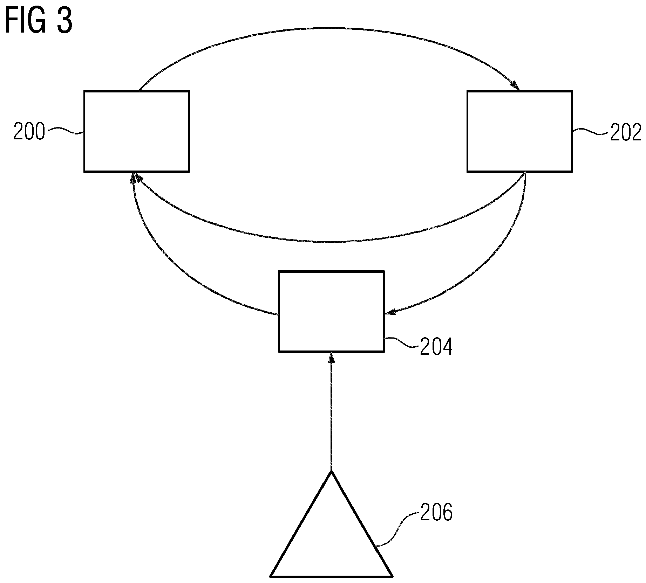

Figur 3 zeigt eine weitere schematische Ansicht eines Trainings. Allgemein kann während des Trainings eines zu trainierenden Systems 200 wie eines autonomen Systems mittels Reinforcement Learning (RL) eine Steuerkomponente oder Steuereinrichtung (Agent) je Zeitschritt eine Aktion oder einen Funktionsablauf auswählen oder ansteuern, wobei eine Interaktion mit der Umgebung 202 stattfindet. Anschließend erhält der Agent, etwa eine Steuereinrichtung 110, Rückmeldung in Form einer aktualisierten Beobachtung und eines Belohnungssignals oder Bewertungssignals, um das Training durchzuführen.

Das Bewertungssignal kann sowohl auf funktionalen, als auch sicherheitsrelevanten Metriken aus der Beobachtung basieren, welche durch erste und zweite Parametrisierungen repräsentiert sein können. Das Bewertungssignal kann von einer Erfassungseinrichtung 204, welche eine Evaluierungseinrichtung aufweisen kann, bereitgestellt werden. Hierfür kann ein RL Experte 206 die Ziele und/oder Grenzwerte für die Parametrisierungen definieren, die erreicht und/oder eingehalten werden müssen. Für verbesserten Trainingserfolg können die einzelnen Metriken sukzessive und in passender Höhe in die Berechnung des Bewertungssignals einfließen. Welche Metrik zu welchem Zeitpunkt des Trainings wie stark gewichtet wird, kann entweder durch den RL Experten vorab definiert werden, oder alternativ durch eine automatisierte Durchsuchung des Parameterraumes experimentell ermittelt werden.

Der Ansatz kann sowohl in Single-, als auch in Multi-Agenten Szenarien verwendet werden. Das Verfahren skaliert insbesondere beim Training mehrerer Agenten mittels Off-Policy-RL, wobei alle Agenten einen gemeinsamen Erfahrungs-Puffer verwenden, der alle im Training gewonnen Rückmeldungen (erfasste Daten) mitsamt den berechneten Bewertungssignalen enthalten kann.

Zusätzliche, dedizierte Hard- und Softwarekomponenten, welche die Einhaltung der Sicherheitsanforderungen sicherstellen und gegebenenfalls situationsbedingt in die Steuerung des Systems eingreifen, können entfallen. Durch die Kompatibilität mit Multi-Agenten Szenarien via Off-Policy-RL ist ein Einsatz in Szenarien, in denen Sample-Effizienz (im Training) und Redundanz (im Einsatz) erforderlich sind, möglich.

Es kann allgemein dynamische Gewichtung der funktionalen Ziele und Sicherheitsanforderungen unter Berücksichtigung des Trainingsfortschritts vorgesehen sein. Beispielsweise kann initial ein einzelnes, funktionales (Teil-) Ziel mit einem positiven Belohnungssignal gekoppelt werden. Sobald dieses Ziel erlernt (mathematisch: die kumulative Belohnung maximiert) wurde, können weitere funktionale Ziele sukzessive ergänzt werden. Dies kann durch entsprechende erste Parametrisierung erreicht werden. Auf die gleiche Art können die Sicherheitsanforderungen ergänzt werden.

Da es bei den Sicherheitsanforderungen meist darum geht, bestimmte Aktionen oder Aktionsfolgen oder zu minimieren, bieten sich negative Belohnungssignale bei Verletzung des jeweiligen Aspektes an. Besonders bei negativen Belohnungssignalen kann die Höhe der Signale (Signalstufe) eine wichtige Rolle spielen. Es kann hilfreich sein, das Signal mit zunehmender Minimierung stärker zu gewichten, d.h. dessen Wert zu erhöhen. Die Schwellenwerte, ab dem ein funktionales Ziel oder eine Sicherheitsanforderungen als erfüllt gelten, können durch einen RL-Experten oder automatisiert vorab definiert werden. Die Reihenfolge, in der die einzelnen Ziele und/oder Sicherheitsaspekte erlernt werden, und deren Gewichtung können entweder vorab durch einen Experten definiert oder mit einer automatischen Durchsuchung des Parameterraumes über einen stufenweisen Trial-and-Error-Prozess ermittelt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Eine Steuereinrichtung kann allgemein Software und/oder Hardware und/oder Firmware umfassen. Insbesondere kann eine Steuereinrichtung ein oder mehrere integrierte Schaltungen und/oder Bearbeitungsschaltungen und/oder Speicher und/oder Prozessoren und/oder Controller (wie etwa Mikrocontroller) und/oder FPGAs (Field Programmaale Gate Array) und/oder ASICs (Application Specific Integrated Circuitry) umfassen. Ein Speicher kann beispielsweise ein oder mehrere Speichermedien aufweisen, etwa RAM (Random Access Memory) und/oder ROM (Read-Only Memory) und/oder Cache-Speicher und/oder ein optisches Medium und/oder magnetisches Medium. Allgemein kann ein Speicher nicht-volatil sein. Eine Steuereinrichtung kann ein oder mehrere Schnittstellen aufweisen, und/oder eine Sensorik umfassen und/oder damit verbunden oder verbindbar sein. Dies gilt insbesondere für ein Trainingssystem, welches ein Beispiel für eine Steuereinrichtung sein kann. Eine Steuereinrichtung kann ein oder mehrere Computer und/oder Module aufweisen, und/oder mehrere Untereinrichtungen.

## Patentansprüche

1. Verfahren zum Trainieren einer Steuereinrichtung (110) für eine elektronisch steuerbare Einrichtung (100), wobei das Verfahren umfasst:
- Erfassen (S10) eines Funktionsablaufs der Einrichtung (100) ;
- Evaluieren (S20) des erfassten Funktionsablaufs basierend auf einer ersten Parametrisierung, welche die Funktionalität betrifft, und einer zweiten Parametrisierung, welche eine oder mehrere Sicherheitsanforderungen betrifft; und
- Bereitstellen (S30) mindestens eines Bewertungssignals basierend auf dem Evaluieren.

2. Verfahren nach Anspruch 1, wobei die zweite Parametrisierung die Umgebung (102) der Einrichtung (100) berücksichtigt.

3. Verfahren nach einem der vorhergehenden Ansprüche, wobei das mindestens eine Bewertungssignal ein Bewertungssignal für Reinforcement Learning ist.

4. Verfahren nach einem der vorhergehenden Ansprüche, wobei das mindestens eine Bewertungssignal ein mehrstufiges Signal ist.

5. Verfahren nach einem der vorhergehenden Ansprüche, wobei das mindestens eine Bewertungssignal mehrere Signale umfasst.

6. Verfahren nach einem der vorhergehenden Ansprüche, wobei die zweite Parametrisierung automatisiert vorgegeben ist.

7. Verfahren nach einem der vorhergehenden Ansprüche, wobei das Evaluieren die erste Parametrisierung und die zweite Parametrisierung dynamisch gewichtet.

8. Verfahren nach einem der vorhergehenden Ansprüche, wobei die Steuereinrichtung (110) in mehreren Teilschritten trainiert wird.

9. Verfahren nach Anspruch 8, wobei für einzelne Teilschritte jeweils ein oder mehrere Teilziele für die Funktionalität und/oder die ein oder mehreren Sicherheitsanforderungen definiert sind, wobei das Evaluieren für einen Teilschritt auf den einen oder mehreren Teilzielen basiert.

10. Verfahren nach Anspruch 9, wobei die erste Parametrisierung separat von der zweiten Parametrisierung evaluiert wird.

11. Steuereinrichtung (110) für eine elektronisch steuerbare Einrichtung (100), wobei die Steuereinrichtung (110) dazu ausgebildet ist, ein Verfahren nach einem der Ansprüche 1 bis 10 durchzuführen, und/oder basierend auf einem Verfahren nach einem der Ansprüche 1 bis 10 eine elektronisch steuerbare Einrichtung (100) anzusteuern.

12. Elektronisch steuerbare Einrichtung (100), welche eine Steuereinrichtung nach Anspruch 11 aufweist und/oder durch eine Steuereinrichtung nach Anspruch 11 angesteuert oder ansteuerbar ist.

13. Computerprogramm, welches computerlesbare Instruktionen umfasst, die eine Steuereinrichtung dazu bringen vermögen, ein Verfahren nach einem der Ansprüche 1 bis 10 auszuführen.

14. Computerlesbares Speichermedium, welches ein Computerprogramm nach Anspruch 13 speichert.
